(19) Europäisches Patentamt
European Patent Office
Office européen des brevets

(11) **EP 4 614 596 A1**

(12) **EUROPEAN PATENT APPLICATION**
published in accordance with Art. 153(4) EPC

(43) Date of publication:
**10.09.2025 Bulletin 2025/37**

(21) Application number: 23929120.6

(22) Date of filing: **27.03.2023**

(51) International Patent Classification (IPC):
$H01M\ 4/36^{(2006.01)}$    $H01M\ 4/58^{(2010.01)}$
$H01M\ 4/525^{(2010.01)}$    $H01M\ 4/505^{(2010.01)}$
$H01M\ 4/13^{(2010.01)}$    $H01M\ 10/0525^{(2010.01)}$

(52) Cooperative Patent Classification (CPC):
**H01M 4/13; H01M 4/36; H01M 4/505; H01M 4/525;
H01M 4/58; H01M 10/0525;** Y02E 60/10

(86) International application number:
**PCT/CN2023/084068**

(87) International publication number:
**WO 2024/197518 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central (HK)**

(72) Inventors:
• **PEI, Renjie
Ningde, Fujian 352100 (CN)**
• **XU, Xiaofu
Ningde, Fujian 352100 (CN)**

• **SHANG, Yibo
Ningde, Fujian 352100 (CN)**
• **PAN, Jianfu
Ningde, Fujian 352100 (CN)**
• **QIN, Yiming
Ningde, Fujian 352100 (CN)**
• **HE, Jianfu
Ningde, Fujian 352100 (CN)**
• **YE, Yonghuang
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITIVE ELECTRODE MATERIAL, POSITIVE ELECTRODE SHEET, SECONDARY BATTERY,
AND ELECTRIC DEVICE**

(57)     This application provides a positive electrode material, a positive electrode plate, a secondary battery, and an electric apparatus. The positive electrode material includes a phosphate-based positive electrode material and a ternary positive electrode material, and the positive electrode material satisfies the following relational expression 1:

relational expression 1: $0.032 < w(Co)/(w(Ni)+w(Mn)+w(A)) \leq 0.075$,

where A represents a doping element in the phosphate-based positive electrode material, w(Co) represents a mass percentage of Co in the positive electrode material, w(Ni) represents a mass percentage of Ni in the positive electrode material, w(Mn) represents a mass percentage of Mn in the positive electrode material, and w(A) represents a mass percentage of A in the positive electrode material. According to the positive electrode material of this application, controlling the percentage of Co in the positive electrode material to satisfy the above relational expression 1 reduces the electronic conductivity, increases the impedance, and increases the temperature rise of a battery during cycling, thereby improving the low-temperature power and low-temperature capacity retention rate of the battery. **In** addition, the reduction in the percentage of Co is also conducive to the cost benefits of raw materials.

5

FIG. 1

**Description**

**TECHNICAL FIELD**

This application relates to the field of battery technologies, and in particular, to a positive electrode material, a positive electrode plate, a secondary battery, and an electric apparatus.

**BACKGROUND**

Since the commercialization of lithium-ion batteries, lithium-ion batteries have rapidly become energy storage apparatuses used in various fields of life due to their advantages such as high energy density, high battery voltage, long cycle life, and no memory effect, attracting widespread attention from experts and researchers.

A ternary positive electrode material NCM system has high energy density, low cost, and long life, but the system has low safety performance and low controllability in the production process. Compared with the ternary positive electrode material, a phosphate-based positive electrode material has the advantages such as low cost, long cycle life, and stable charge and discharge cycles at high temperatures, serving as a currently desirable lithium-ion battery positive electrode material suitable for large-scale applications. However, a lithium iron phosphate material has relatively low conductivity, low rate performance, and undesirable low-temperature performance (especially below -30°C).

**SUMMARY**

This application provides a positive electrode material, a positive electrode plate, a secondary battery, and an electric apparatus, so as to improve the low-temperature power and low-temperature capacity retention rate of a battery.

According to a first aspect of this application, a positive electrode material is provided, including a phosphate-based positive electrode material and a ternary positive electrode material, where the positive electrode material satisfies the following relational expression 1:

$$\text{relational expression 1: } 0.032 < w(Co)/(w(Ni)+w(Mn)+w(A)) \leq 0.075,$$

where A represents a doping element in the phosphate-based positive electrode material, $w(Co)$ represents a mass percentage of Co in the positive electrode material, $w(Ni)$ represents a mass percentage of Ni in the positive electrode material, $w(Mn)$ represents a mass percentage of Mn in the positive electrode material, and $w(A)$ represents a mass percentage of A in the positive electrode material.

According to the positive electrode material of this application, controlling the percentage of Co in the positive electrode material to satisfy the above relational expression 1 reduces the electronic conductivity, increases the impedance, and increases the temperature rise of a battery during cycling, thereby improving the low-temperature power and low-temperature capacity retention rate of the battery. In addition, the reduction in the percentage of Co is also conducive to the cost benefits of raw materials.

In any embodiment of the first aspect, $1.55 < w(Co) < 3.25$, optionally $1.8 < w(Co) < 2.9$, and further optionally $1.85 < w(Co) < 2.85$; and/or $17.55 < w(Ni) < 29.55$, optionally $19.2 < w(Ni) < 29.2$, and further optionally $19.9 < w(Ni) < 26.5$; and/or $16.55 < w(Mn) < 21.55$, optionally $18.2 < w(Mn) < 21.1$, and further optionally $18.4 < w(Mn) < 20.85$; and/or $1.05 < w(A) < 6.55$, optionally $2.2 < w(A) < 6.5$, and further optionally $2.35 < w(A) < 5.85$. Controlling the percentages of the above elements, especially the percentage of Co, can ensure all of the low-temperature performance, energy density, cycling performance, and cost benefits of the battery.

In any embodiment of the first aspect, $w(Co)/(w(Ni)+w(Mn)+w(A))$ is 0.035-0.065, optionally 0.045-0.060. The low-temperature performance of the battery is further improved.

In any embodiment of the first aspect, a mass percentage of the element Ni in the ternary positive electrode material satisfies $20\% < w'(Ni) \leq 55\%$, optionally $25\% \leq w'(Ni) \leq 50\%$, $30\% \leq w'(Ni) \leq 45\%$, or $30\% \leq w'(Ni) \leq 40\%$. The percentage of the element Ni in the ternary positive electrode material falling within the above range can allow the ternary positive electrode material to have good energy density and rate cycling performance.

In any embodiment of the first aspect, $0.062 < w'(Co)/w'(Ni) \leq 0.410$; optionally, $w'(Co)/w'(Ni)$ is 0.062-0.158; and further optionally, $w'(Co)/w'(Ni)$ is 0.083-0.136. Ternary positive electrode material series with different percentages of Ni have significant differences in performance. In ternary positive electrode material series with the same percentage of Ni, limiting the percentage of Co within the above range can more significantly reduce the costs, improve the low-temperature performance, and avoid the problems of deteriorated conductivity and degraded rate performance of the material due to an excessively low percentage of Co.

In any embodiment of the first aspect, $0.08 < w(A)/w(Ni) \leq 0.41$; and optionally, $w(A)/w(Ni)$ is 0.10-0.30, further optionally 0.12-0.28. Further limiting the ratio of the phosphate-based positive electrode material to the ternary positive electrode material by using the foregoing relational expression can better make full use of the advantages of the two.

In any embodiment of the first aspect, the phosphate-based positive electrode material has a chemical formula: $Li_{1+x}Mn_{1-y}A_yP_{1-z}E_zO_4$, where x is any value in a range of -0.100 to 0.100; y is any value in a range of 0.001 to 0.500; z is any value in a range of 0.001 to 0.100; A includes one or more elements selected from a group consisting of Zn, Al, Na, K, Mg, Mo, W, Ti, V, Zr, Fe, Ga, Sn, Sb, Nb, and Ge, optionally one or more elements selected from a group consisting of Fe, Ti, V, and Mg; E includes one or more elements selected from a group consisting of B, Si, N, S, F, Cl, and Br; and optionally, E is one element selected from a group consisting of B, Si, N, and S. Doping phosphate with element A and element E is conducive to improving the structural stability of the phosphate-based positive electrode material and the rate performance of a secondary battery with the phosphate-based positive electrode material.

In any embodiment of the first aspect, a chemical formula of the phosphate-based positive electrode material is $Li_aAl_xMn_{l-y}A2_yP_{l-z}D_zO_{4-n}G_n$, where A1 includes one or more elements selected from a group consisting of Zn, Al, Na, K, Mg, Nb, Mo, and W; A2 includes one or more elements selected from a group consisting of Ti, V, Zr, Fe, Ni, Mg, Co, Ga, Sn, Sb, Nb, and Ge; D includes one or more elements selected from a group consisting of B (boron), S, Si, and N; G includes one or more elements selected from a group consisting of S, F, Cl, and Br; a is selected from a range of 0.9 to 1.1; x is selected from a range of 0.001 to 0.1; y is selected from a range of 0.001 to 0.5; z is selected from a range of 0.001 to 0.1; n is selected from a range of 0.001 to 0.1; and the phosphate-based positive electrode material is electrically neutral. Doping at the above four sites with the above specific elements simultaneously in specified amounts can significantly improve the rate performance, cycling performance, and/or high-temperature stability of the phosphate-based positive electrode material.

In any embodiment of the first aspect, the phosphate-based positive electrode material further optionally has a core-shell structure; a shell layer of the core-shell structure is a functional coating layer; and the functional coating layer optionally includes one or more of a pyrophosphate layer, a phosphate layer, and a carbon layer. The above functional coating layer can effectively suppress dissolution of transition metals and reduce surface side reactions of the phosphate-based positive electrode material.

In any embodiment of the first aspect, the ternary positive electrode material satisfies a chemical formula: $Li_aNi_bCo_cM1_dM2_eO_fR_g$ or $Li_aNi_bCo_cM1_dM2_eO_fR_g$ with a coating layer on a surface, where $0.75 \leq a \leq 1.2$, $0.38 < b < 0.85$, $0.03 < c < 0.15$, $0 < d < 1$, $0 \leq e \leq 0.2$, $1 \leq f \leq 2.5$, $0 \leq g \leq 1$, and $f+g \leq 3$; M1 includes one or both of Mn or Al, and optionally, a molar ratio of Al to Mn is (0-1):4; M2 includes one or more selected from a group consisting of Zr, Zn, Cu, Cr, Mg, Fe, V, Ti, Sr, Sb, Y, W, and Nb; and R includes one or more selected from a group consisting of N, F, S, and Cl.

According to a second aspect of this application, a positive electrode plate is provided, including a current collector and a positive electrode film layer, where the positive electrode film layer includes the positive electrode material according to any one of the embodiments of the first aspect. The positive electrode plate including the foregoing positive electrode material of this application can improve the low-temperature power and low-temperature capacity retention rate of a battery, and reduce the costs of raw materials.

In any embodiment of the second aspect, a coating surface density of the positive electrode film layer is 15.50-20.78 $mg/cm^2$, and/or a compacted density of a positive electrode active substance is 2.4-3.40 $g/cm^3$. The positive electrode plate with the above coating surface density or compacted density has a high capacity value, is also conducive to the manufacturing process, and can improve the power performance of a battery cell.

According to a third aspect of this application, a secondary battery is provided. The secondary battery includes a positive electrode plate, a separator, an electrolyte, and a negative electrode plate, where the positive electrode plate is the positive electrode plate according to any one of the foregoing embodiments. The low-temperature power and low-temperature capacity retention rate of the secondary battery are effectively improved.

According to a fourth aspect of this application, an electric apparatus is provided, including the secondary battery, where the secondary battery includes the secondary battery according to any one of the embodiments of the third aspect. The kinetic performance and charge capacity of the electric apparatus at low temperatures are improved.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.

FIG. 5 is an exploded view of the battery pack according to the embodiment of this application in FIG. 4.

FIG. 6 is a schematic diagram of an electric apparatus using a secondary battery as a power source according to an embodiment of this application.

The accompanying drawings are not drawn to scale.

Description of reference signs:

1. battery pack; 2. upper box body; 3. lower box body; 4. battery module; 5. secondary battery; 51. housing; 52. electrode assembly; and 53. top cover assembly.

## DESCRIPTION OF EMBODIMENTS

The following further describes the embodiments of this application in detail with reference to the accompanying drawings and embodiments. The following detailed description of the embodiments and the accompanying drawings are intended to illustrate the principle of this application, rather than to limit the scope of this application, meaning this application is not limited to the embodiments described herein.

Embodiments that specifically disclose a positive electrode material, a positive electrode plate, a negative electrode plate, a secondary battery, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, the method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

[Secondary battery]

The secondary battery, also referred to as a rechargeable battery or a storage battery, is a battery whose active material can be activated for continuous use through charging after the battery is discharged.

Typically, the secondary battery includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is disposed between the positive electrode plate and the negative electrode plate to mainly prevent short circuit between positive and negative electrodes and to allow the active ions to pass through. The electrolyte is between the positive electrode plate and the negative electrode plate to mainly conduct the active ions.

[Positive electrode material]

An embodiment of this application provides a positive electrode material. The positive electrode material includes a phosphate-based positive electrode material and a ternary positive electrode material, where the positive electrode material satisfies the following relational expression 1:

$$\text{relational expression 1: } 0.032 < w(Co)/(w(Ni)+w(Mn)+w(A)) \leq 0.075,$$

where A represents a metal doping element in the phosphate-based positive electrode material, w(Co) represents a mass percentage of Co in the positive electrode material, w(Ni) represents a mass percentage of Ni in the positive electrode material, w(Mn) represents a mass percentage of Mn in the positive electrode material, and w(A) represents a mass percentage of A in the positive electrode material.

The percentages of the metal elements in the positive electrode material can be tested in the following method: a mixed positive electrode powder sample is digested using aqua regia in a 1:1 ratio at a high temperature of 200°C and a high pressure through a microwave digestion manner, and an inductively coupled plasma emission spectrometer (model: ICAP-7400) is used to perform ICP main element test on a mixed positive electrode through inductively coupled plasma emission spectrometry.

According to the positive electrode material of this application, controlling the percentage of Co in the positive electrode material to satisfy the above relational expression 1 allows for a relatively low percentage of Co in the positive electrode material, reduces the electronic conductivity, increases the impedance, and increases the temperature rise of a battery during cycling, thereby improving the low-temperature power and low-temperature capacity retention rate of the battery. In addition, the reduction in the percentage of Co is also conducive to the cost benefits of raw materials.

In some embodiments, 1.55<w(Co)<3.25, 16.20<w(Ni)<29.55, 16.55<w(Mn)<21.55, and 1.05<w(A)<6.55.

The above w(Co) can be arbitrarily selected within the above range, including but not limited to 1.55, 165, 1.75, 1.80, 1.85, 1.95, 2.0, 2.02, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3.0, 3.05, 3.10, 3.15, 3.20, or 3.25.

The above w(Ni) can be arbitrarily selected within the above range, including but not limited to 16.20, 16.50, 17.00, 17.50, 18.00, 18.50, 18.70, 19.0, 19.50, 19.60, 18.80, 20.00, 22.30, 20.50, 21.00, 21.10, 21.20, 21.50, 21.60, 22.00, 22, 50, 23.00, 23.50, 24.00, 24.50, 25.00, 25.20, 25.50, 26.00, 26.50, 27.00, 27.50, 28.00, 28.50, 29.00, or 29.50.

The above w(Mn) can be arbitrarily selected within the above range, including but not limited to 17.55, 18.00, 18.25, 18.40, 18.50, 19.00, 19.50, 20.00, 20.10, 20.15, 20.50, 21.00, 21.10, 21.20, 21.30, 21.40, 21.50, or 21.55.

The above w(A) can be arbitrarily selected within the above range, including but not limited to 1.05, 1.10, 1.50, 2.00, 2.10, 2.30, 2.40, 2.70, 2.80, 2.90, 3.00, 3.20, 3.40, 3.50, 3.70, 3.80, 4.00, 4.10, 4.30, 4.50, 4.70, 4.90, 5.00, 5.20, 5.40, 5.60, 5.80, 6.00, 6.30, or 6.50.

When the percentage of Co is excessively low, the conductivity of the positive electrode plate is low, which easily causes deterioration in the rate performance and cycling performance of the battery. On the contrary, when the percentage of Co is higher than a specified level, the relative percentage of Ni/Mn is reduced, resulting in a loss of energy density and plateau voltage of the battery and an increase in the costs of raw materials. In some embodiments, 1.8<w(Co)<2.9, optionally 1.85<w(Co)<2.85; and/or 19.2<w(Ni)<29.2, optionally 19.9<w(Ni)<26.5; and/or 18.2<w(Mn)<21.1, optionally 18.4<w(Mn)<20.85; and/or 2.2<w(A)<6.5, optionally 2.35<w(A)<5.85. Controlling the percentages of the above elements, especially the percentage of Co, can ensure all of the low-temperature performance, energy density, low-temperature cycling performance, and cost benefits of the battery.

In some embodiments, the value of w(Co)/(w(Ni)+w(Mn)+w(A)) includes but is not limited to 0.032, 0.033, 0.035, 0.036, 0.037, 0.038, 0.040, 0.042, 0.045, 0.048, 0.050, 0.054, 0.059, 0.60, 0.063, 0.065, 0.070, or 0.075. In some embodiments, w(Co)/(w(Ni)+w(Mn)+w(A)) is 0.035-0.065, optionally 0.045-0.060, so that the low-temperature performance of the battery is further improved.

Ternary positive electrode material series with different percentages of Ni have significant differences in performance. In some embodiments, a mass percentage of the element Ni in the ternary positive electrode material satisfies 20%<w'(Ni)≤55%, optionally 25%≤w'(Ni)≤50%, 30%≤w'(Ni)≤45%, or 30%≤w'(Ni)≤40%. The percentage of the element Ni in the ternary positive electrode material falling within the above range can allow the ternary positive electrode material to have good energy density and rate cycling performance. The ternary positive electrode material with the above w'(Ni) is typically a ternary positive electrode material in which Ni accounts for 50%-60% of the total mass of Ni, Co, and Mn, or a ternary positive electrode material in which Ni accounts for 60%-70% of the total mass of Ni, Co, and Mn.

In some embodiments, $0.062 < w'(Co)/w'(Ni) \leq 0.410$. The $w'(Co)/w'(Ni)$ includes but is not limited to 0.062, 0.065, 0.066, 0.070, 0.074, 0.078, 0.080, 0.082, 0.083, 0.085, 0.087, 0.090, 0.093, 0.095, 0.100, 0.110, 0.120, 0.125, 0.128, 0.130, 0.135, 0.140, 0.145, 0.155, 0.160, 0.167, 0.2, 0.3, or 0.4. Optionally, $w'(Co)/w'(Ni)$ is 0.062-0.158; and further optionally, $w'(Co)/w'(Ni)$ is 0.083-0.136. In ternary positive electrode material series with the same percentage of Ni, limiting the percentage of Co within the above range can more significantly reduce the costs, improve the low-temperature performance, and avoid the problems of deteriorated conductivity and degraded rate performance of the material due to an excessively low percentage of Co.

The ternary positive electrode material has higher capacity energy density and voltage plateau compared to the phosphate-based positive electrode material, and the phosphate-based positive electrode material has better cycling stability and cost advantages compared to the ternary positive electrode material. Thus, in some embodiments, $0.08 < w(A)/w(Ni) \leq 0.41$, and the $w(A)/w(Ni)$ includes but is not limited to 0.080, 0.085, 0.09, 0.093, 0.095, 0.10, 0.11, 0.12, 0.13, 0.14, 0.15, 0.2, 0.22, 0.25, 0.26, 0.28, 0.3, or 0.4. Optionally, $w(A)/w(Ni)$ is 0.10-0.30, further optionally 0.12-0.28. Further limiting the ratio of the phosphate-based positive electrode material to the ternary positive electrode material by using the foregoing relational expression can better make full use of the advantages of the two.

The phosphate-based positive electrode material used in this application may be an undoped phosphate-based positive electrode material, a doped phosphate-based positive electrode material, or a coated phosphate-based positive electrode material that is commonly used for a positive electrode material. In some embodiments, the phosphate-based positive electrode material has a chemical formula: $Li_{1+x}Mn_{1-y}A_yP_{1-z}E_zO_4$, where x is any value in a range of -0.100 to 0.100; y is any value in a range of 0.001 to 0.500; z is any value in a range of 0.001 to 0.100; A includes one or more elements selected from a group consisting of Zn, Al, Na, K, Mg, Mo, W, Ti, V, Zr, Fe, Ga, Sn, Sb, Nb, and Ge, optionally one or more elements selected from a group consisting of Fe, Ti, V, and Mg; E includes one or more elements selected from a group consisting of B, Si, N, S, F, Cl, and Br; and optionally, E is one element selected from a group consisting of B, Si, N, and S. Doping phosphate with element A and element E is conducive to improving the structural stability of the phosphate-based positive electrode material and the rate performance of a secondary battery with the phosphate-based positive electrode material.

In some embodiments, a chemical formula of the phosphate-based positive electrode material is $Li_aAl_xMn_{1-y}A2_yP_{1-z}D_zO_{4-n}G_n$, where A1 includes one or more elements selected from a group consisting of Zn, Al, Na, K, Mg, Nb, Mo, and W; A2 includes one or more elements selected from a group consisting of Ti, V, Zr, Fe, Ni, Mg, Co, Ga, Sn, Sb, Nb, and Ge; D includes one or more elements selected from a group consisting of B (boron), S, Si, and N; G includes one or more elements selected from a group consisting of S, F, Cl, and Br; a is selected from a range of 0.9 to 1.1, for example, 0.97, 0.977, 0.984, 0.988, 0.99, 0.991, 0.992, 0.993, 0.994, 0.995, 0.996, 0.997, 0.998, or 1.01; x is selected from a range of 0.001 to 0.1, for example, 0.001, 0.005, 0.01, 0.02, 0.03, 0.04, 0.05, 0.06, 0.07, 0.08, 0.09, or 0.1; y is selected from a range of 0.001 to 0.5, for example, 0.001, 0.005, 0.02, 0.05, 0.1, 0.15, 0.2, 0.25, 0.3, 0.34, 0.345, 0.349, 0.35, 0.4, or 0.5; z is selected from a range of 0.001 to 0.1, for example, 0.001, 0.005, 0.08, or 0.1; n is selected from a range of 0.001 to 0.1, for example, 0.001, 0.005, 0.08, or 0.1; and the phosphate-based positive electrode material is electrically neutral. A1, A2, D, and G are elements doped at the Li site, Mn site, P site, and O site of a compound $LiMnPO_4$, respectively. Without wishing to be constrained by the theory, it is currently believed that the performance improvement of the phosphate-based positive electrode material is related to the reduction in a lattice change rate of the phosphate-based positive electrode material during intercalation and deintercalation of lithium and the reduction in the surface activity. Reducing the lattice change rate can reduce the difference of lattice constants between two phases at a crystal boundary, reduce the interfacial stress, and enhance transport capability of $Li^+$ at the interface, thereby improving the rate performance of a positive electrode active material. In addition, a high surface activity easily leads to serious interfacial side reactions, exacerbating gas production, electrolyte consumption, and damage to the interface, thereby affecting the performance of the battery in terms of cycling and the like. In the above phosphate-based positive electrode material, the lattice change rate is reduced through doping at the Li site and the Mn site. Doping at the Mn site also effectively reduces the surface activity, thereby suppressing Mn dissolution and the interfacial side reactions between the positive electrode active material and the electrolyte. Doping at the P site accelerates a change rate of the length of the Mn-O bond and lowers a small polaron migration barrier of the material, thereby facilitating the electronic conductivity. Doping at the O site has a good effect on reducing the interfacial side reactions. Doping at the P site and the O site also affects the Mn dissolution in the antisite defects and kinetic performance. Therefore, doping reduces the concentration of the antisite defects in the material, improves the kinetic performance of the material, and can also change the morphology of particles, thereby increasing the compacted density. The applicant has surprisingly found that doping at the Li site, Mn site, P site, and O site of the compound $LiMnPO_4$ with specific elements simultaneously in specified amounts can obtain significantly improved rate performance, significantly reduce the dissolution of Mn and the element doped at the Mn site, obtain significantly improved cycling performance and/or high-temperature stability, and increase the compacted density of the material. A combination of the above A1 and A2 is the metal doping element in the phosphate-based positive electrode material as defined above.

In some embodiments, the phosphate-based positive electrode material further optionally has a core-shell structure; a shell layer of the core-shell structure is a functional coating layer; and the functional coating layer optionally includes one or more of a pyrophosphate layer, a phosphate layer, and a carbon layer. Since transition metal has a high migration barrier in pyrophosphate (higher than 1 eV), the dissolution of the transition metal can be effectively suppressed. In addition, phosphate exhibits excellent lithium-ion conductivity and can reduce the amount of lithium impurities on the surface. The carbon layer can effectively improve the conductivity and desolvation capability of $LiMnPO_4$, act as a "barrier" to further hinder the migration of manganese ions into the electrolyte, and reduce the corrosion of the active material by the electrolyte. In addition, the carbon layer in the mixture can also optimize a conductive network around the ternary positive electrode material, and improve the mixing uniformity of the phosphate-based positive electrode material and the ternary positive electrode material.

The ternary positive electrode material used in this application may be a ternary positive electrode material commonly used for the positive electrode material. In some embodiments, the ternary positive electrode material satisfies a chemical formula: $Li_aNi_bCo_cM1_dM2_eO_fR_g$ or $Li_aNi_bCo_cM1_dM2_eO_fR_g$ with a coating layer on a surface, where $0.75{\leq}a{\leq}1.2$, $0.38<b<0.85$, $0.03<c<0.15$, $0<d<1$, $0{\leq}e{\leq}0.2$, $1{\leq}f{\leq}2.5$, $0{\leq}g{\leq}1$, and $f+g{\leq}3$; M1 includes one or both of Mn or Al, and optionally, a molar ratio of Al to Mn is (0-1):4; M2 includes one or more selected from a group consisting of Zr, Zn, Cu, Cr, Mg, Fe, V, Ti, Sr, Sb, Y, W, and Nb; and R includes one or more selected from a group consisting of N, F, S, and Cl.

The phosphate-based positive electrode material and ternary positive electrode material used in this application can both be prepared using the existing materials in the prior art or prepared using known methods. For example, the phosphate-based positive electrode material includes a series of lithium manganese iron phosphate positive electrode materials produced by Shenzhen Dynanonic Co., Ltd. (abbreviated as Dynanonic in the examples); and the ternary positive electrode material includes a series of ternary positive electrode materials produced by Ningbo Ronbay New Energy Technology Co., Ltd. (abbreviated as Ronbay Technology in the examples).

[Positive electrode plate]

The positive electrode plate typically includes a positive electrode current collector and a positive electrode film layer disposed on at least one side of the positive electrode current collector, where the positive electrode film layer includes the positive electrode material according to any embodiment of this application. The positive electrode plate including the foregoing positive electrode material of this application can improve the low-temperature power and low-temperature capacity retention rate of a battery, and reduce the costs of raw materials.

For example, the positive electrode current collector has two opposite surfaces in its thickness direction, and the positive electrode film layer is provided on either or both of the two opposite surfaces of the positive electrode current collector.

In some embodiments, a coating surface density of the positive electrode film layer is 15.50-20.78 $mg/cm^2$, and/or a compacted density of a positive electrode active substance is 2.4-3.40 $g/cm^3$. The positive electrode plate with the above coating surface density or compacted density has a high capacity value, is also conducive to the manufacturing process, and can improve the power performance of a battery cell.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode plate]

The negative electrode plate includes a negative electrode current collector and a negative electrode film layer disposed on at least one side of the negative electrode current collector, where the negative electrode film layer includes a negative electrode active material.

For example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elementary silicon, silicon-oxygen compound, silicon-carbon composite, silicon-nitrogen composite, and silicon alloy. The tin-based material may be selected from at least one of elementary tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

The electrolyte conducts ions between the positive electrode plate and the negative electrode plate. The electrolyte is not limited to any specific type in this application, and may be selected based on needs. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving overcharge performance of the battery and an additive for improving high-temperature performance or low-temperature performance of the battery.

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and poly(vinylidene difluoride). The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

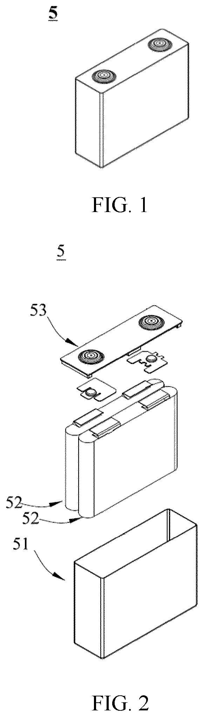

The secondary battery is not limited to any particular shape in this application, and may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening in communication with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates into the electrode assembly 52. The secondary battery 5 may include one or more electrode assemblies 52, and persons skilled in the art may make choices based on actual requirements.

In some embodiments, the secondary battery may be assembled into a battery module, and the battery module may include one or more secondary batteries. The specific quantity may be chosen by persons skilled in the art according to use and capacity of the battery module.

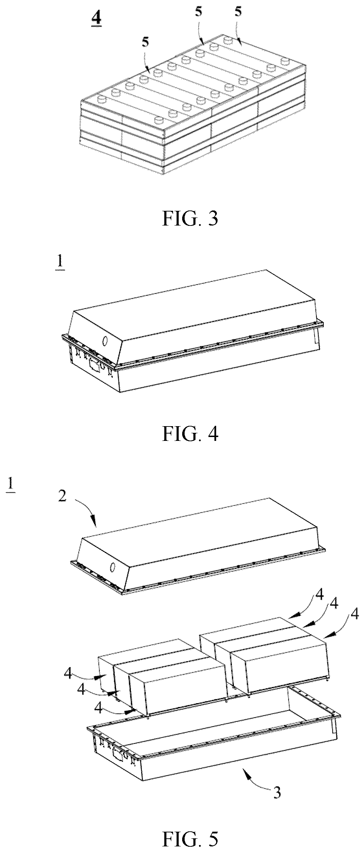

FIG. 3 shows a battery module 4 as an example. Referring to FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fastened by fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

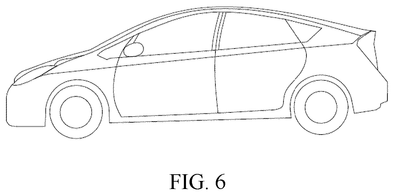

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

[Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

**In positive electrode material sources, the phosphate-based positive electrode material $LiMn_{0.6}Fe_{0.4}PO_4$ was DY-3 type phosphate purchased from Dynanonic, and the ternary positive electrode material was an S760 series ternary material purchased from Ronbay Technology. Other positive electrode materials were prepared using the following method.**

**Preparation example 1**

(1) Preparation of positive electrode active material

**Preparation of doped manganese oxalate:** 1.3 mol of $MnSO_4 \cdot H_2O$ and 0.7 mol of $FeSO_4 \cdot H_2O$ were mixed well in a mixer for 6 hours. The resulting mixture was transferred to a reactor, and 10 L of deionized water and 2 mol of oxalic acid dihydrate (calculated as oxalic acid) were added. The reactor was heated to 80°C and stirred at a rotation speed of 600 rpm for 6 hours until the reaction ended (no bubble was generated), and an Fe-doped manganese oxalate suspension was obtained. Then, the suspension was filtered, and the resulting filter cake was dried at 120°C and then ground to obtain Fe-doped manganese oxalate particles with a median particle size $D_v50$ of approximately 100 nm.

**Preparation of doped lithium manganese phosphate:** 1 mol of the above manganese oxalate particles, 0.4985 mol of lithium carbonate, 0.0005 mol of $Al_2(SO_4)_3$, an aqueous phosphoric acid solution containing 0.999 mol of phosphoric acid at a concentration of 85%, 0.001 mol of $H_4SiO_4$, 0.0005 mol of $NH_4HCl_2$, and 0.005 mol of sucrose were added to 20 L of deionized water. The resulting mixture was transferred to a sand mill and fully ground and stirred for 10 hours to obtain a slurry. The slurry was transferred to a spray drying device for spray drying and granulation, with a drying temperature set to 250°C and a drying time set to 4 hours, to obtain particles. In a protective atmosphere with nitrogen (90% by volume)+hydrogen (10% by volume), the powder was sintered at 700°C for 10 hours to obtain carbon-coated $Li_{0.997}Al_{0.001}Mn_{0.65}Fe_{0.35}P_{0.999}Si_{0.001}O_{3.999}Cl_{0.001}$.

Preparation example 2

**(1) Preparation of co-doped lithium manganese phosphate core**

**Preparation of Fe co-doped manganese oxalate:** 689.5 g of manganese carbonate (calculated as $MnCO_3$, the same below) and 463.4 g of ferrous carbonate (calculated as $FeCO_3$, the same below) were mixed well in a mixer for 6 hours. The resulting mixture was transferred to a reactor, and 5 liters of deionized water and 1260.6 g of oxalic acid dihydrate (calculated as $C_2H_2O_4 \cdot 2H_2O$, the same below). The reactor was heated to 80°C and stirred at a rotation speed of 600 rpm for 6 hours until the reaction ended (no bubble was generated), and an Fe co-doped manganese oxalate suspension was obtained. Then, the suspension was filtered, and the resulting filter cake was dried at 120°C and then ground to obtain Fe and S co-doped manganese oxalate dihydrate particles with a median particle size $D_v50$ of 100 nm.

**Preparation of Fe and S co-doped lithium manganese phosphate:** The manganese oxalate dihydrate particles (1793.4 g) obtained in the previous step, 369.0 g of lithium carbonate (calculated as $Li_2CO_3$, the same below), 1.6 g of dilute sulfuric acid at a concentration of 60% (calculated as 60% $H_2SO_4$, the same below), and 1148.9 g of ammonium dihydrogen phosphate (calculated as $NH_4H_2PO_4$, the same below) were added to 20 liters of deionized water, and the resulting mixture was stirred for 10 hours and mixed well to obtain a slurry. The slurry was transferred to a spray drying device for spray drying and granulation, with a drying temperature set to 250°C and a drying time set to 4 hours, to obtain powder. In a protective atmosphere with nitrogen (90% by volume)+hydrogen (10% by volume), the above powder was sintered at 700°C for 4 hours to obtain 1572.1 g of Fe and S co-doped lithium manganese phosphate $Li_{0.999}Mn_{0.60}Fe_{0.40}P_{0.999}S_{0.0001}O_4$.

A method for determining the percentages of the elements in the material was described below.

About 0.4 g of dried positive electrode plate/powder or about 1 g of wet positive electrode plate/powder (both accurate to 0.0001 g) was taken and placed in a 25 ml beaker, 2 ml to 5 ml of nitric acid was added, and the beaker was left overnight. Then, the beaker was placed on an electric heating plate and heated at about 100°C (a voltage regulator was used to adjust an input voltage to control the temperature). After the positive electrode plate/powder was digested, 0.5 ml of perchloric acid was added and then heated at about 140°C for digestion until white smoke ceased to appear. The residue should be white; otherwise, nitric acid and perchloric acid were added for repeated digestion. Ultimately, 7% (referred to the volume percentage of the acid, the same below) hydrochloric acid was used for dissolution and extraction. The resulting product was diluted to an appropriate volume based on the percentages of the elements under test, the test was started using an ICP-OES test instrument.

**Tests and corresponding calculation results were recorded in Table 1.**

In Table 1, the ternary mass percentage represents the mass percentage of the ternary positive electrode material in the total mass of the ternary positive electrode material and the phosphate-based positive electrode material.

**Table 1**

| | Phosphate-based positive electrode material | Ternary positive electrode material | Ternary mass Percentage | $\dfrac{w(Co)}{w(Ni)+w(Mn)+w(A)}$ | w(Co) | w(Ni) | w(Mn) | w(A) | w'(Ni) | w'(Co) | $\dfrac{w(A)}{w(Ni)}$ |
|---|---|---|---|---|---|---|---|---|---|---|---|
| Example 1 | $LiMn_{0.6}Fe_{0.4}PO_4$ | $LiNi_{0.63}Co_{0.04}Mn_{0.33}O_2$ | 70.0% | 0.032 | 1.81 | 29.19 | 21.09 | 6.49 | 46.34 | 2.87 | 0.22 |
| Example 2 | $LiMn_{0.6}Fe_{0.4}PO_4$ | $LiNi_{0.64}Co_{0.04}Mn_{0.32}O_2$ | 70.0% | 0.035 | 1.86 | 28.35 | 20.17 | 3.86 | 45.00 | 2.95 | 0.14 |
| Example 3 | $LiMn_{0.6}Fe_{0.4}PO_4$ | $LiNi_{0.63}Co_{0.05}Mn_{0.32}O_2$ | 70.0% | 0.045 | 2.34 | 28.35 | 20.17 | 3.86 | 45.00 | 3.72 | 0.14 |
| Example 4 | $LiMn_{0.6}Fe_{0.4}PO_4$ | $LiNi_{0.61}Co_{0.08}Mn_{0.31}O_2$ | 55.0% | 0.060 | 2.87 | 22.28 | 20.00 | 5.79 | 45.00 | 5.80 | 0.26 |
| Example 5 | $LiMn_{0.6}Fe_{0.4}PO_4$ | $LiNi_{0.53}Co_{0.07}Mn_{0.40}O_2$ | 80.0% | 0.065 | 2.64 | 19.44 | 18.27 | 2.57 | 27.00 | 3.66 | 0.13 |
| Example 6 | $LiMn_{0.6}Fe_{0.4}PO_4$ | $LiNi_{0.56}Co_{0.08}Mn_{0.36}O_2$ | 70.0% | 0.073 | 2.89 | 19.22 | 18.28 | 2.22 | 30.50 | 4.59 | 0.12 |
| Example 7 | $LiMn_{0.6}Fe_{0.4}PO_4$ | $LiNi_{0.66}Co_{0.04}Mn_{0.30}O_2$ | 70.0% | 0.035 | 1.75 | 28.35 | 18.41 | 3.86 | 45.00 | 2.78 | 0.14 |
| Example 8 | $LiMn_{0.6}Fe_{0.4}PO_4$ | $LiNi_{0.64}Co_{0.04}Mn_{0.32}O_2$ | 70.0% | 0.035 | 1.85 | 28.35 | 20.17 | 3.86 | 45.00 | 2.94 | 0.14 |
| Example 9 | $LiMn_{0.6}Fe_{0.4}PO_4$ | $LiNi_{0.61}Co_{0.08}Mn_{0.31}O_2$ | 55.0% | 0.059 | 2.85 | 22.28 | 20.00 | 5.79 | 45.00 | 5.75 | 0.26 |
| Example 10 | $LiMn_{0.6}Fe_{0.4}PO_4$ | $LiNi_{0.519}Co_{0.082}Mn_{0.399}O_2$ | 80.0% | 0.075 | 2.95 | 18.72 | 18.27 | 2.57 | 26.00 | 4.10 | 0.14 |
| Example 11 | $LiMn_{0.6}Fe_{0.4}PO_4$ | $LiNi_{0.498}Co_{0.078}Mn_{0.424}O_2$ | 80.0% | 0.074 | 2.95 | 19.00 | 18.27 | 2.57 | 26.39 | 4.10 | 0.14 |
| Example 12 | $LiMn_{0.6}Fe_{0.4}PO_4$ | $LiNi_{0.53}Co_{0.07}Mn_{0.40}O_2$ | 80.0% | 0.065 | 2.64 | 19.50 | 18.27 | 2.57 | 27.08 | 3.66 | 0.13 |
| Example 13 | $LiMn_{0.6}Fe_{0.4}PO_4$ | $LiNi_{0.62}Co_{0.08}Mn_{0.30}O_2$ | 55.0% | 0.059 | 2.87 | 23.00 | 20.00 | 5.79 | 46.46 | 5.80 | 0.25 |
| Example 14 | $LiMn_{0.6}Fe_{0.4}PO_4$ | $LiNi_{0.62}Co_{0.04}Mn_{0.34}O_2$ | 70.0% | 0.037 | 1.86 | 26.50 | 20.17 | 3.86 | 42.07 | 2.95 | 0.15 |
| Example 15 | $LiMn_{0.6}Fe_{0.4}PO_4$ | $LiNi_{0.65}Co_{0.04}Mn_{0.31}O_2$ | 70.0% | 0.033 | 1.75 | 29.50 | 20.17 | 3.86 | 46.82 | 2.78 | 0.13 |
| Example 16 | $LiMn_{0.6}Fe_{0.4}PO_4$ | $LiNi_{0.523}Co_{0.082}Mn_{0.395}O_2$ | 80.0% | 0.075 | 2.95 | 18.72 | 18.00 | 2.57 | 26.00 | 4.10 | 0.14 |
| Example 17 | $LiMn_{0.6}Fe_{0.4}PO_4$ | $LiNi_{0.534}Co_{0.068}Mn_{0.398}O_2$ | 80.0% | 0.065 | 2.64 | 19.50 | 18.50 | 2.57 | 27.08 | 3.66 | 0.13 |
| Example 18 | $LiMn_{0.6}Fe_{0.4}PO_4$ | $LiNi_{0.61}Co_{0.04}Mn_{0.35}O_2$ | 70.0% | 0.036 | 1.86 | 26.50 | 20.85 | 3.86 | 42.07 | 2.95 | 0.15 |
| Example 19 | $LiMn_{0.6}Fe_{0.4}PO_4$ | $LiNi_{0.619}Co_{0.38}Mn_{0.343}O_2$ | 70.0% | 0.033 | 1.75 | 28.35 | 21.50 | 3.86 | 45.00 | 2.78 | 0.14 |
| Example 20 | $LiMn_{0.65}Fe_{0.35}PO_4$ | $LiNi_{0.52}Co_{0.08}Mn_{0.40}O_2$ | 80.0% | 0.075 | 2.95 | 19.00 | 18.27 | 2.10 | 26.39 | 4.10 | 0.11 |
| Example 21 | $LiMn_{0.625}Fe_{0.375}PO_4$ | $LiNi_{0.53}Co_{0.07}Mn_{0.40}O_2$ | 80.0% | 0.066 | 2.64 | 19.44 | 18.27 | 2.30 | 27.00 | 3.66 | 0.12 |
| Example 22 | $LiMn_{0.7}Fe_{0.3}PO_4$ | $LiNi_{0.63}Co_{0.05}Mn_{0.32}O_2$ | 70.0% | 0.046 | 2.34 | 28.35 | 20.17 | 2.50 | 45.00 | 3.72 | 0.09 |
| Example 23 | $LiMn_{0.65}Fe_{0.35}PO_4$ | $LiNi_{0.61}Co_{0.08}Mn_{0.31}O_2$ | 55.0% | 0.061 | 2.87 | 22.28 | 20.00 | 5.00 | 45.00 | 5.80 | 0.22 |
| Example 24 | $LiMn_{0.6}Fe_{0.4}PO_4$ | $LiNi_{0.612}Co_{0.078}Mn_{0.31}O_2$ | 55.0% | 0.059 | 2.85 | 22.28 | 20.00 | 5.85 | 45.00 | 5.75 | 0.26 |

| | Phosphate-based positive electrode material | Ternary positive electrode material | Ternary mass Percentage | W(Co)/w(Ni)+w(Mn)+w(A) | w(Co) | w(Ni) | w(Mn) | w(A) | w'(Ni) | w'(Co) | W(A)/W(Ni) |
|---|---|---|---|---|---|---|---|---|---|---|---|
| Example 25 | $LiMn_{0.57}Fe_{0.43}PO_4$ | $LiNi_{0.61}Co_{0.08}Mn_{0.31}O_2$ | 55.0% | 0.059 | 2.87 | 22.28 | 20.00 | 6.50 | 45.00 | 5.80 | 0.29 |
| Example 26 | $LiMn_{0.56}Fe_{0.44}PO_4$ | $LiNi_{0.53}CO_{0.05}Mn_{0.41}O_2$ | 55.0% | 0.037 | 1.67 | 16.58 | 21.49 | 6.80 | 33.50 | 3.38 | 0.41 |
| Example 27 | $LiMn_{0.6}Fe_{0.4}PO_4$ | $LiNi_{0.29}CO_{0.05}Mn_{0.67}O_2$ | 80.0% | 0.042 | 1.80 | 10.80 | 29.07 | 2.57 | 15.00 | 2.50 | 0.24 |
| Example 28 | $LiMn_{0.45}Fe_{0.55}PO_4$ | $LiNi_{0.36}Co_{0.06}Mn_{0.58}O_2$ | 90.0% | 0.056 | 2.59 | 16.20 | 27.86 | 2.32 | 20.00 | 3.20 | 0.14 |
| Example 29 | $LiMn_{0.5}Fe_{0.5}PO_4$ | $LiNi_{0.49}Co_{0.07}Mn_{0.44}O_2$ | 88.0% | 0.066 | 2.82 | 19.80 | 20.38 | 2.32 | 25.00 | 3.56 | 0.12 |
| Example 30 | $LiMn_{0.6}Fe_{0.4}PO_4$ | $LiNi_{0.56}Co_{0.07}Mn_{0.37}O_2$ | 80.0% | 0.062 | 2.64 | 21.60 | 18.27 | 2.57 | 30.00 | 3.66 | 0.12 |
| Example 31 | $LiMn_{0.6}Fe_{0.4}PO_4$ | $LiNi_{0.60}CO_{0.06}Mn_{0.34}O_2$ | 70.0% | 0.048 | 2.34 | 25.20 | 20.17 | 3.86 | 40.00 | 3.72 | 0.15 |
| Example 32 | $LiMn_{0.6}Fe_{0.4}PO_4$ | $LiNi_{0.63}Co_{0.05}Mn_{0.32}O_2$ | 70.0% | 0.045 | 2.34 | 28.35 | 20.17 | 3.86 | 45.00 | 3.72 | 0.14 |
| Example 33 | $LiMn_{0.6}Fe_{0.4}PO_4$ | $LiNi_{0.65}Co_{0.05}Mn_{0.30}O_2$ | 70.0% | 0.042 | 2.34 | 31.50 | 20.17 | 3.86 | 50.00 | 3.72 | 0.12 |
| Example 34 | $LiMn_{0.6}Fe_{0.4}PO_4$ | $LiNi_{0.67}Co_{0.05}Mn_{0.28}O_2$ | 70.0% | 0.040 | 2.34 | 34.65 | 20.17 | 3.86 | 55.00 | 3.72 | 0.11 |
| Example 35 | $LiMn_{0.6}Fe_{0.4}PO_4$ | $LiNi_{0.69}Co_{0.04}Mn_{0.26}O_2$ | 70.0% | 0.038 | 2.34 | 37.80 | 20.17 | 3.86 | 60.00 | 3.72 | 0.10 |
| Example 36 | $LiMn_{0.6}Fe_{0.4}PO_4$ | $LiNi_{0.68}Co_{0.04}Mn_{0.28}O_2$ | 59.0% | 0.033 | 1.80 | 29.21 | 20.05 | 5.28 | 55.00 | 3.39 | 0.18 |
| Example 37 | $LiMn_{0.6}Fe_{0.4}PO_4$ | $LiNi_{0.66}Co_{0.05}Mn_{0.29}O_2$ | 50.0% | 0.035 | 1.80 | 24.75 | 20.43 | 6.44 | 55.00 | 4.00 | 0.26 |
| Example 38 | $LiMn_{0.6}Fe_{0.4}PO_4$ | $LiNi_{0.66}Co_{0.10}Mn_{0.24}O_2$ | 50.0% | 0.069 | 2.90 | 19.20 | 16.56 | 6.44 | 42.67 | 6.45 | 0.34 |
| Example 39 | $LiMn_{0.6}Fe_{0.4}PO_4$ | $LiNi_{0.58}Co_{0.05}Mn_{0.37}O_2$ | 95.0% | 0.054 | 2.74 | 29.20 | 19.52 | 2.21 | 34.15 | 3.20 | 0.08 |
| Example 40 | $LiMn_{0.6}Fe_{0.4}PO_4$ | $LiNi_{0.57}Co_{0.06}Mn_{0.37}O_2$ | 68.5% | 0.054 | 2.22 | 28.35 | 20.17 | 0.00 | 33.50 | 3.60 | 0.14 |
| Example 41 | $LiMn_{0.6}Fe_{0.4}PO_4$ | $LiNi_{0.57}Co_{0.06}Mn_{0.37}O_2$ | 49.8% | 0.046 | 1.61 | 28.35 | 20.17 | 3.86 | 33.50 | 3.60 | 0.14 |
| Example 42 | $LiMn_{0.6}Fe_{0.4}PO_4$ | $LiNi_{0.61}Co_{0.05}Mn_{0.33}O_2$ | 70.0% | 0.046 | 2.34 | 26.46 | 20.17 | 3.86 | 42.00 | 3.72 | 0.15 |
| Example 43 | $LiMn_{0.6}Fe_{0.4}PO_4$ | $LiNi_{0.59}CO_{0.08}Mn_{0.32}O_2$ | 55.0% | 0.062 | 2.87 | 20.79 | 20.00 | 5.79 | 42.00 | 5.80 | 0.28 |
| Example 44 | $LiMn_{0.6}Fe_{0.4}PO_4$ | $LiNi_{0.63}Co_{0.05}Mn_{0.32}O_2$ | 50.0% | 0.036 | 1.62 | 19.20 | 19.45 | 6.50 | 42.66 | 3.60 | 0.34 |
| Example 45 | $Li_{0.997}Al_{0.001}Mn_{0.65}Fe_{0.35}P_{0.999}Si_{0.001}O_{3.999}Cl_{0.001}$ | $LiNi_{0.61}Co_{0.08}Mn_{0.31}O_2$ | 45% | 0.060 | 2.87 | 22.28 | 20.00 | 5.85 | 45.00 | 5.80 | 0.26 |
| Example 46 | $Li_{0.999}Mn_{0.60}Fe_{0.40}P_{0.999}S_{0.001}O_4$ | $LiNi_{0.63}Co_{0.05}Mn_{0.32}O_2$ | 30% | 0.045 | 2.34 | 28.35 | 20.17 | 3.90 | 45.00 | 3.72 | 0.14 |

(continued)

| | Phosphate-based positive electrode material | Ternary positive electrode material | Ternary mass Percentage | W(Co)/w (Ni)+ w(Mn)+ w(A) | w(Co) | w(Ni) | w(Mn) | w(A) | w'(Ni) | w'(Co) | W(A)/ W(Ni) |
|---|---|---|---|---|---|---|---|---|---|---|---|
| Comparative example 1 | $LiMn_{0.6}Fe_{0.4}PO_4$ | $LiNi_{0.38}Co_{0.29}NM_{0.33}O_2$ | 0.0% | 0.000 | 0.00 | 0.00 | 19.37 | 12.87 | 40.00 | 30.00 | / |
| Comparative example 2 | $LiMn_{0.6}Fe_{0.4}PO_4$ | $LiNi_{0.51}Co_{0.24}Mn_{0.24}O_2$ | 20.0% | 0.090 | 3.24 | 6.84 | 18.73 | 10.30 | 38.00 | 18.00 | 1.51 |
| Comparative example 3 | $LiMn_{0.6}Fe_{0.4}PO_4$ | $LiNi_{0.47}CO_{0.20}Mn_{0.33}O_2$ | 40.0% | 0.132 | 5.40 | 12.60 | 20.62 | 7.72 | 35.00 | 15.00 | 0.61 |
| Comparative example 4 | $LiMn_{0.6}Fe_{0.4}PO_4$ | $LiNi_{0.38}Co_{0.29}Mn_{0.33}O_2$ | 60.0% | 0.303 | 16.20 | 21.60 | 26.65 | 5.15 | 40.00 | 30.00 | 0.24 |

1. Rectangular aluminum-shell battery:

The rectangular aluminum-shell battery was prepared using the positive electrode material in Table 1 as a positive electrode active substance for a positive electrode plate, and a preparation method was described below.

(1) Preparation of positive electrode plate:

The positive electrode active substance, poly(vinylidene difluoride) (PVDF), and conductive carbon were added to a specified amount of N-methylpyrrolidone (NMP), where a mass ratio of the active substance, a binder, and a conductive agent was 98:1:1. The resulting mixture was stirred in a drying room to form a uniform slurry, with a viscosity controlled at 3000-10000 mPa·S. Then, the slurry was applied onto an aluminum foil, with a coating surface density of 18.77 mg/cm$^2$, followed by drying and cold pressing to prepare a final positive electrode plate.

(2) Preparation of negative electrode plate:

Graphite, sodium carboxymethyl cellulose (CMC), styrene-butadiene rubber (SBR), and conductive carbon were added to a specified amount of deionized water, where a mass ratio of graphite, sodium carboxymethyl cellulose, styrene-butadiene rubber, and a conductive agent was 90:2:3:5. The resulting mixture was stirred to form a uniform slurry, with a viscosity controlled at 3000-10000 mPa·S. Then, the slurry was applied onto a copper foil, followed by drying and cold pressing to prepare a negative electrode plate.

(3) Preparation of rectangular aluminum-shell battery:

The prepared and cut positive electrode plate, negative electrode plate, and separator (polyethylene (PE) porous polymer film) were wound, then ultrasonic welding of positive and negative electrode tabs was performed. An aluminum tab was used for a positive electrode, a copper tab was used for a negative electrode, and both positive and negative electrode tabs were located on a same side of a battery cell. The battery cell after tab welding was placed into an appropriately sized aluminum shell for soft connection and top cover welding. The battery cell was dried under vacuum at 175°C for 24 h, followed by electrolyte injection (the electrolyte was formed by LiPF$_6$ at a concentration of 1 mol/L/(ethylene carbonate (EC)+diethyl carbonate (DEC)+dimethyl carbonate (DMC)) (in a volume ratio of 1:1:1)+5wt% fluoroethylene carbonate (FEC)), standing, formation, aging, degassing, sealing twice, and capacity testing to obtain a prepared rectangular aluminum-shell battery.

2. Low-temperature performance test: test current power at - 20°C/operation condition test at -7°C

Operation condition test at -7°C: The prepared rectangular aluminum-shell battery was subjected to CLTC national standard operation condition test at - 7°C (under a voltage within a range of 2.1 V to 4.4 V) and 25°C (under a voltage within a range of 2.5 V to 4.4 V). Discharge capacities C0 and C1 at the room temperature of 25°C and -7°C were recorded respectively. A ratio of C1/C0 was calculated as the low-temperature capacity retention rate.

Test of test current power at -20°C: At -20°C, under a voltage of 2.1 V to 4.4 V, the battery cell was first charged at a constant current of 0.33C, then fully charged to 4.4 V at a constant voltage of 0.05C, and then discharged to 10% SOC at 0.33C. The battery cell was discharged for 10s at any current applied, and a voltage value after the battery cell was discharged for 10s was recorded. When the current was maximum and the voltage was still higher than 2.1 V after 10s, corresponding discharge currents I0 and U0 at that points were recorded respectively. The test current power shown was I0*U0.

3. Cycling performance test at 25°C:

At a constant temperature of 25°C and under a voltage of 2.5 V to 4.4 V, the prepared battery was charged to 4.4 V at a current of 0.5C0, and then charged at a constant voltage of 4.4 V until the current was lower than or equal to 0.05C0. Then, the battery was left standing for 5 min and then discharged to 2.5 V at a current of 1C0. A capacity was recorded as Cn (n=1, 2, 3...), and the above operations were repeated. After 500 charge and discharge cycles, a capacity retention rate was calculated as a ratio of C500/C3, and a corresponding capacity retention rate was used as an evaluation index for the cycling performance.

4. Rate performance test at 25°C:

At 25°C, the battery cell was charged to 4.4 V at a constant current of 0.33C and then charged to 0.05C at a constant voltage. Then, the battery cell was discharged to 2.5 V at a constant current of 0.33C. Three charge and discharge cycles were performed. A discharge capacity at the third cycle was recorded as C1. At 25°C, the battery cell was charged to 4.4 V at a constant current of 0.33C and then charged to 0.05C at a constant voltage. Then, the battery cell was discharged to 2.5 V at a constant current of 2C. Three charge and discharge cycles were performed. A discharge capacity at the third cycle was recorded as C2. A ratio of C2/C1 represented the discharge rate performance of the battery cell at 2C.

The results were recorded in Table 2.

**Table 2**

|  | Current power at 10% SOC at -20°C (W) | Capacity retention rate under operation condition at -7°C | Rate performance | Cycling performance |
|---|---|---|---|---|
| Example 1 | 256 | 80% | 93.32% | 94.08% |
| Example 2 | 268 | 82% | 93.68% | 94.16% |
| Example 3 | 286 | 84% | 94.96% | 94.30% |
| Example 4 | 282 | 82% | 97.21% | 94.46% |
| Example 5 | 271 | 81% | 95.82% | 95.26% |
| Example 6 | 252 | 80% | 97.79% | 94.73% |
| Example 7 | 238 | 78% | 93.03% | 94.06% |
| Example 8 | 258 | 80% | 96.45% | 94.10% |
| Example 9 | 254 | 81% | 96.87% | 94.36% |
| Example 10 | 229 | 74% | 98.74% | 95.41% |
| Example 11 | 226 | 76% | 98.89% | 95.48% |
| Example 12 | 256 | 80% | 95.82% | 95.26% |
| Example 13 | 272 | 80% | 97.21% | 94.44% |
| Example 14 | 263 | 81% | 93.68% | 94.14% |
| Example 15 | 231 | 76% | 93.03% | 94.04% |
| Example 16 | 229 | 75% | 98.74% | 95.41% |
| Example 17 | 258 | 80% | 95.33% | 95.22% |
| Example 18 | 256 | 83% | 93.68% | 94.12% |
| Example 19 | 259 | 79% | 93.03% | 94.02% |
| Example 20 | 228 | 76% | 98.74% | 95.41% |
| Example 21 | 254 | 81% | 95.82% | 95.26% |
| Example 22 | 285 | 83% | 94.96% | 94.28% |
| Example 23 | 281 | 81% | 97.21% | 94.42% |
| Example 24 | 281 | 80% | 96.87% | 94.34% |
| Example 25 | 264 | 79% | 97.21% | 94.40% |
| Example 26 | 223 | 75% | 92.69% | 95.03% |
| Example 27 | 234 | 76% | 93.15% | 95.52% |
| Example 28 | 255 | 75% | 95.58% | 95.56% |
| Example 29 | 263 | 76% | 96.59% | 95.58% |
| Example 30 | 278 | 79% | 95.82% | 94.32% |
| Example 31 | 276 | 81% | 96.96% | 94.26% |
| Example 32 | 265 | 80% | 94.96% | 94.24% |
| Example 33 | 266 | 78% | 94.96% | 94.22% |

(continued)

| | Current power at 10% SOC at -20°C (W) | Capacity retention rate under operation condition at -7°C | Rate performance | Cycling performance |
|---|---|---|---|---|
| Example 34 | 254 | 77% | 94.96% | 93.95% |
| Example 35 | 231 | 75% | 94.96% | 93.95% |
| Example 36 | 245 | 76% | 93.21% | 93.64% |
| Example 37 | 248 | 75% | 93.15% | 93.51% |
| Example 38 | 226 | 75% | 98.33% | 94.48% |
| Example 39 | 232 | 77% | 96.13% | 94.68% |
| Example 40 | 228 | 73% | 94.56% | 94.62% |
| Example 41 | 226 | 75% | 92.18% | 94.56% |
| Example 42 | 276 | 83% | 94.96% | 94.20% |
| Example 43 | 268 | 82% | 97.21% | 94.71% |
| Example 44 | 232 | 74% | 92.23% | 94.00% |
| Example 45 | 282 | 81% | 97.21% | 94.38% |
| Example 46 | 287 | 82% | 94.96% | 94.18% |
| Comparative example 1 | 165 | 71% | 91.05% | 95.51% |
| Comparative example 2 | 177 | 74% | 99.56% | 95.62% |
| Comparative example 3 | 184 | 72% | 99.81% | 95.68% |
| Comparative example 4 | 196 | 76% | 104.20% | 95.98% |

It can be seen from the test results that the percentage of Co in the ternary material NCM and the percentage of NCM in the mixed positive electrode both affect the low-temperature power and low-temperature capacity retention rate of the battery. In Examples 1 to 6, the ratio of the mass percentage of Co to the total mass percentage of Ni+Mn+A in the electrode plate is adjusted and limited. In Examples 7 to 10, the mass percentage range of Co in the electrode plate is adjusted. After comparison of the data of Examples 1 to 10, it is found that controlling the percentage of Co in the positive electrode material at a relatively low level reduces the electronic conductivity, increases the impedance, and increases the temperature rise of the battery during cycling, thereby improving the low-temperature power and low-temperature capacity retention rate of the battery. However, in Examples 1 and 2, when the percentage of Co is low, the conductivity of the positive electrode plate is low, which easily causes deterioration in the rate performance and cycling performance of the battery. On the contrary, in Example 6, when the percentage of Co is high, the relative percentage of Ni/Mn is reduced, resulting in a loss of energy density and plateau voltage of the battery and an increase in the costs of raw materials.

In Examples 11 to 15, the mass percentage range of Ni in the electrode plate is adjusted. In Examples 16 to 19, the mass percentage range of Mn is adjusted. In Examples 20 to 26, the mass percentage range of A is adjusted. In Examples 41 to 46, the ratio range of A/Ni in the electrode plate is adjusted. Adjusting the percentages of the above elements, especially the percentage of Co in Examples 8 and 9, can ensure all of the low-temperature performance, energy density, cycling performance, and cost benefits of the battery.

Ternary positive electrode material series with different percentages of Ni have significant differences in performance. In Examples 27 to 35, the mass percentage of Ni in the ternary material NCM is adjusted. In Example 31, the Ni element in the ternary positive electrode material allows the positive electrode material to have good low-temperature performance as well as high energy density and rate cycling performance.

In Examples 36 to 38, the relative level of Co/Ni in NCM is adjusted. In ternary positive electrode material series with the same percentage of Ni, limiting the percentage of Co within the above range can more significantly reduce the costs, improve the low-temperature performance, and avoid the problems of deteriorated conductivity and degraded rate performance of the material due to an excessively low percentage of Co.

Comparative examples 1 and 2 show that when the percentage of LMAP in the electrode plate is excessively high, the battery energy density gain deteriorates. Comparative Examples 3 and 4 show that when the percentage of Co in NCM of the electrode plate is excessively high, the battery cycling rate performance is improved, and the internal resistance decreases, but the advantages of low-temperature power and low-temperature capacity retention rate deteriorate, and the costs are also increased.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A positive electrode material, comprising a phosphate-based positive electrode material and a ternary positive electrode material, wherein the positive electrode material satisfies the following relational expression 1:

$$\text{relational expression 1: } 0.032 < w(Co)/(w(Ni)+w(Mn)+w(A)) \leq 0.075,$$

wherein A represents a metal doping element in the phosphate-based positive electrode material, w(Co) represents a mass percentage of Co in the positive electrode material, w(Ni) represents a mass percentage of Ni in the positive electrode material, w(Mn) represents a mass percentage of Mn in the positive electrode material, and w(A) represents a mass percentage of A in the positive electrode material.

2. The positive electrode material according to claim 1, wherein $1.55 < w(Co) < 3.25$, optionally $1.8 < w(Co) < 2.9$, and further optionally $1.85 < w(Co) < 2.85$; and/or $17.55 < w(Ni) < 29.55$, optionally $19.2 < w(Ni) < 29.2$, and further optionally $19.9 < w(Ni) < 26.5$; and/or $16.55 < w(Mn) < 21.55$, optionally $18.2 < w(Mn) < 21.1$, and further optionally $18.4 < w(Mn) < 20.85$; and/or $1.05 < w(A) < 6.55$, optionally $2.2 < w(A) < 6.5$, and further optionally $2.50 < w(A) < 5.0$.

3. The positive electrode material according to claim 1 or 2, wherein $w(Co)/(w(Ni)+w(Mn)+w(A))$ is 0.035-0.065, optionally 0.045-0.060.

4. The positive electrode material according to any one of claims 1 to 3, wherein a mass percentage of the element Ni in the ternary positive electrode material satisfies $20\% < w'(Ni) \leq 55\%$, optionally $25\% \leq w'(Ni) \leq 50\%$, $30\% \leq w'(Ni) \leq 45\%$, or $30\% \leq w'(Ni) \leq 40\%$.

5. The positive electrode material according to any one of claims 1 to 4, wherein $0.062 < w'(Co)/w'(Ni) \leq 0.410$; optionally, $w'(Co)/w'(Ni)$ is 0.062-0.158; and further optionally, $w'(Co)/w'(Ni)$ is 0.083-0.136.

6. The positive electrode material according to any one of claims 1 to 5, wherein $0.08 < w(A)/w(Ni) \leq 0.41$; and optionally, $w(A)/w(Ni)$ is 0.10-0.30, further optionally 0.12-0.28.

7. The positive electrode material according to any one of claims 1 to 6, wherein the phosphate-based positive electrode material has a chemical formula: $Li_{1+x}Mn_{1-y}A_yP_{1-z}E_zO_4$, wherein x is any value in a range of -0.100 to 0.100; y is any value in a range of 0.001 to 0.500; z is any value in a range of 0.001 to 0.100; A comprises one or more elements selected from a group consisting of Zn, Al, Na, K, Mg, Mo, W, Ti, V, Zr, Fe, Ga, Sn, Sb, Nb, and Ge, optionally one or more elements selected from a group consisting of Fe, Ti, V, and Mg; E comprises one or more elements selected from a group consisting of B, Si, N, S, F, Cl, and Br; and optionally, E is one element selected from a group consisting of B, Si, N, and S.

8. The positive electrode material according to any one of claims 1 to 6, wherein a chemical formula of the phosphate-based positive electrode material is $Li_aA1_xMn_{1-y}A2_yP_{1-z}D_zO_{4-n}G_n$, wherein A1 comprises one or more elements selected from a group consisting of Zn, Al, Na, K, Mg, Nb, Mo, and W; A2 comprises one or more elements selected from a group consisting of Ti, V, Zr, Fe, Ni, Mg, Co, Ga, Sn, Sb, Nb, and Ge; D comprises one or more elements selected from a group consisting of B (boron), S, Si, and N; G comprises one or more elements selected from a group consisting of S, F, Cl, and Br; a is selected from a range of 0.9 to 1.1; x is selected from a range of 0.001 to 0.1; y is selected from a range of 0.001 to 0.5; z is selected from a range of 0.001 to 0.1; n is selected from a range of 0.001 to 0.1; and the phosphate-based positive electrode material is electrically neutral.

9. The positive electrode material according to claim 7 or 8, wherein the phosphate-based positive electrode material further optionally has a core-shell structure; a shell layer of the core-shell structure is a functional coating layer; and the functional coating layer optionally comprises one or more of a pyrophosphate layer, a phosphate layer, and a carbon layer.

10. The positive electrode material according to any one of claims 1 to 9, wherein the ternary positive electrode material satisfies a chemical formula: $Li_aNi_bCo_cM1_dM2_eO_fR_g$ or $Li_aNi_bCo_cM1_dM2_eO_fA_g$ with a coating layer on a surface, wherein $0.75 \leq a \leq 1.2$, $0.38 < b < 0.85$, $0.03 < c < 0.15$, $0 < d < 1$, $0 \leq e \leq 0.2$, $1 \leq f \leq 2.5$, $0 \leq g \leq 1$, and $f+g \leq 3$; M1 comprises one or both of Mn or Al, and optionally, a molar ratio of Al to Mn is $(0-1):4$; M2 comprises one or more selected from a group consisting of Zr, Zn, Cu, Cr, Mg, Fe, V, Ti, Sr, Sb, Y, W, and Nb; and R comprises one or more selected from a group consisting of N, F, S, and Cl.

11. A positive electrode plate, comprising a current collector and a positive electrode film layer, wherein the positive electrode film layer comprises the positive electrode material according to any one of claims 1 to 10.

12. A secondary battery, comprising a positive electrode plate, a separator, an electrolyte, and a negative electrode plate, wherein the positive electrode plate is the positive electrode plate according to claim 10 or 11.

13. An electric apparatus, comprising a secondary battery, wherein the secondary battery comprises the secondary battery according to claim 12.

FIG. 1

FIG. 2

<u>4</u>

5  5

5

5

FIG. 3

<u>1</u>

FIG. 4

<u>1</u>

2

4  4

4

4

4

4

3

FIG. 5

FIG. 6

## INTERNATIONAL SEARCH REPORT

| International application No. |
| --- |
| **PCT/CN2023/084068** |

| A. | CLASSIFICATION OF SUBJECT MATTER |
| --- | --- |

H01M4/36(2006.01)i; H01M4/58(2010.01)i; H01M4/525(2010.01)i; H01M4/505(2010.01)i; H01M4/13(2010.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ISI: 宁德时代新能源, 正极, 复合, 磷酸盐, 磷酸锰铁锂, 磷酸铁锰锂, 三元, 镍钴锰, 钴镍锰, 镍锰钴, 钴锰镍, Ni+Co+Mn, Li+Mn+Fe+P+O4, cathode, positive, composite, phosphate, lithium manganese ferrous phosphate, lithium ferrous manganese phosphate, nickel cobalt lithium manganate, ternary material

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107528050 A (SHANGHAI MAPLE AUTOMOBILE CO., LTD.) 29 December 2017 (2017-12-29)<br>description, paragraphs [0002]-[0236] | 1-13 |
| X | CN 107565094 A (SHANGHAI MAPLE AUTOMOBILE CO., LTD.) 09 January 2018 (2018-01-09)<br>description, paragraphs [0002]-[0214] | 1-13 |
| X | CN 113948673 A (TIANJIN EV ENERGIES CO., LTD.) 18 January 2022 (2022-01-18)<br>description, paragraphs [0002]-[0183] | 1-13 |
| X | CN 111883771 A (TIANJIN SIKELANDE TECHNOLOGY CO., LTD.) 03 November 2020 (2020-11-03)<br>description, paragraphs [0003]-[0091] | 1-13 |
| A | CN 107146875 A (CHINA AVIATION LITHIUM BATTERY (LUOYANG) CO., LTD.) 08 September 2017 (2017-09-08)<br>entire document | 1-13 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **23 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2"></td><td>International application No.<br>**PCT/CN2023/084068**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 107546379 A (NINGBO ZHINENG NEW MATERIAL CO., LTD.) 05 January 2018 (2018-01-05)<br>    entire document | 1-13 |

**INTERNATIONAL SEARCH REPORT**
Information on patent family members

International application No.

**PCT/CN2023/084068**

| Patent document cited in search report | | | Publication date (day/month/year) | Patent family member(s) | | | Publication date (day/month/year) |
|---|---|---|---|---|---|---|---|
| CN | 107528050 | A | 29 December 2017 | None | | | |
| CN | 107565094 | A | 09 January 2018 | None | | | |
| CN | 113948673 | A | 18 January 2022 | None | | | |
| CN | 111883771 | A | 03 November 2020 | CN | 111883771 | B | 31 March 2023 |
| CN | 107146875 | A | 08 September 2017 | None | | | |
| CN | 107546379 | A | 05 January 2018 | WO | 2019034105 | A1 | 21 February 2019 |

Form PCT/ISA/210 (patent family annex) (July 2022)